# EUROPEAN PATENT APPLICATION

(11) **EP 4 219 087 A1**
(43) Date of publication of application: **02.08.2023**
(21) Application number: 21871009.3
(22) Date of filing: 27.07.2021
(51) Int. Cl.: B25J 9/16

(54) **FLEXIBLE MECHANICAL ARM CONTROL METHOD AND ROBOT SYSTEM**

(30) Priority: 25.09.2020 CN 202011024129
(71) Applicant: Microport Navibot (Suzhou) Co., Ltd., Suzhou, Jiangsu 215000 (CN)
(72) Inventor: SUN, Feng, Suzhou, Jiangsu 215000 (CN); PENG, Weili, Suzhou, Jiangsu 215000 (CN); LI, Tao, Suzhou, Jiangsu 215000 (CN); HE, Chao, Suzhou, Jiangsu 215000 (CN)
(74) Representative: Patentship Patentanwaltsgesellschaft mbH
(86) International application number: PCT/CN2021/108600
(87) International publication number: WO 2022/062631

(57) **Abstract**

A flexible mechanical arm control method and a robot system. The control method comprises steps of: obtaining a total amount of angular displacement of a joint output end of the flexible mechanical arm (110) along a first direction when a load on the joint output end changes; driving the joint output end to move in a second direction according to the total amount of angular displacement, so that the joint output end returns to a position and posture before the load changes; the second direction is opposite to the first direction. According to the method, the position and posture of the joint output end can be maintained when the load on the joint output end of the flexible mechanical arm (110) changes, so as to facilitate a doctor to execute predetermined surgical operation in the fixed position and posture.

## Description

### TECHNICAL FIELD

The present invention belongs to the technical field of medical instruments, and in particular relates to a flexible mechanical arm control method and a robot system.

### BACKGROUND

Flexible mechanical arms have been widely used for their compact actuators, high precision, and low energy consumption. Compared with rigid mechanical arms, flexible mechanical arms are more flexible, safer and less prone to injury. However, flexible mechanical arms also have a series of problems due to its own flexibility, including: (1) in the process of being driven by a motor, there will be a deviation between the actual end displacement and the expected end displacement of a flexible mechanical arm; (2) changes in position and posture due to changes in the load on the j oint output end of the flexible mechanical arm while the output tail end of the flexible mechanical arm is expected to be maintained in a constant position and posture.

In view of the above problems, although some solutions have been proposed in the prior art, it is still impossible to precisely control the position and posture of the flexible mechanical arm, especially when the external force or load on the joint output end of the flexible mechanical arm changes, and it is expected that the output tail end of the flexible mechanical arm keeps its position and posture unchanged.

### SUMMARY OF THE INVENTION

An object of the present invention is to provide a flexible mechanical arm control method and a robot system. The control method can maintain the position and posture of the joint output end when the load on the joint output end of the flexible mechanical arm changes, so as to maintain the accuracy of the position and posture of the joint output end when the joint is in its holding state, and to maintain the accuracy of the position and posture of the tail end of the flexible mechanical arm when the flexible mechanical arm is in its holding state.

To achieve the above object, the present invention provides a flexible mechanical arm control method, comprising steps of:
obtaining a total amount of angular displacement of a joint output end of the flexible mechanical arm along a first direction when a load on the joint output end changes;
driving the joint output end to move in a second direction according to the total amount of angular displacement, so that the joint output end returns to a position and posture before the load changes; wherein the second direction is opposite to the first direction.
Optionally, an output interface is provided on the joint output end, and a first angle sensor is provided on the output interface;
the first angle sensor is configured to sense a first angular displacement of the output interface as the total angular displacement of the joint output end.

Optionally, an output interface is provided on the joint output end, a first angle sensor is provided on the output interface, and a torque sensor is provided on an output end of the first angle sensor;
wherein obtaining the total amount of angular displacement comprises:
sensing a first angular displacement of the output interface by the first angle sensor;
sensing a torque of a joint by the torque sensor;
calculating a product of the torque of the joint and an elastic constant of the torque sensor as a second angular displacement of the torque sensor;
calculating a sum of the first angular displacement and the second angular displacement as the total amount of angular displacement.

Optionally, the elastic constant of the torque sensor is obtained by:
applying a predetermined torque to the torque sensor;
using a calibrated angle sensor to sense an angular displacement of the torque sensor subjected to the predetermined torque;
calculating the elastic constant based on the predetermined torque and the angular displacement of the torque sensor subjected to the predetermined torque.

Optionally, an output interface is provided on the joint output end, a torque sensor is provided on the output interface, and a first angle sensor is provided on an output end of the torque sensor;
wherein obtaining the total amount of angular displacement comprises:
establishing a conversion relationship between a reading variation of the torque sensor and the total amount of angular displacement before the load changes;
obtaining the reading variation of the torque sensor when the load changes;
obtaining the total amount of angular displacement according to the reading variation of the torque sensor and the conversion relationship.

Optionally, establishing the conversion relationship between the reading variation of the torque sensor and the total amount of angular displacement comprises:
causing a predetermined change in the load on the j oint output end;
obtaining the reading variation of the torque sensor when the predetermined change occurs in the load, and obtaining the total amount of angular displacement of the joint output end when the predetermined change occurs in the load using a forward kinematics of robot, so as to establish the conversion relationship.

Optionally, an output interface is provided on the joint output end, a torque sensor is provided on the output interface, and a first angle sensor is provided on an output end of the torque sensor; wherein the control method comprises:
sensing the total amount of angular displacement by the first angle sensor.

Optionally, an output interface is provided on the joint output end, and a torque sensor is provided on the output interface;
wherein obtaining the total amount of angular displacement comprises:
establishing a conversion relationship between the torque sensor and the total amount of angular displacement before the load changes;
obtaining a reading variation of the torque sensor when the load changes;
obtaining the total amount of angular displacement according to the reading variation of the torque sensor and the conversion relationship.

Optionally, establishing the conversion relationship between the torque sensor and the total amount of angular displacement comprises:
causing a predetermined change in the load on the j oint output end;
obtaining the reading variation of the torque sensor when the predetermined change occurs in the load, and obtaining the total amount of angular displacement of the joint output end when the predetermined change occurs in the load using robot kinematics, so as to establish the conversion relationship.

Optionally, the joint output end is driven to move in the second direction by a driving mechanism, and during the movement of the joint output end in the second direction, a second angle sensor is used to sense a rotational speed of the driving mechanism, and the driving mechanism is servo-controlled according to the rotational speed.

To achieve the above object, the present invention also provides a robot system, comprising:
a flexible mechanical arm comprising a joint, the joint comprising a joint output end;
a sensing device, arranged on the joint output end;
a driving mechanism, connected to the joint; and
a control unit, communicatively connected with the sensing device and the driving mechanism;
wherein the control unit is configured to obtain a total amount of angular displacement of the joint output end along a first direction when a load on the joint output end sensed by the sensing device changes; and control the driving mechanism according to the total angular displacement to move the joint output end in a second direction until the joint output end returns to a position and posture before the load changes; wherein the second direction is opposite to the first direction.

Optionally, the sensing device comprises a first angle sensor or a torque sensor.

Optionally, an output interface is provided on the joint output end, and the sensing device comprises a first angle sensor and a torque sensor; wherein an input end of the first angle sensor is connected to the output interface, and an output end of the first angle sensor is connected to an input end of the torque sensor; or
wherein an input end of the torque sensor is connected to the output interface, and an output end of the torque sensor is connected to an output end of the first angle sensor.

Optionally, the first angle sensor comprises an absolute angle encoder.

Optionally, comprising a second angle sensor arranged on the driving mechanism and communicatively connected with the control unit;
wherein the control unit is further configured to, when the driving mechanism drives the joint output end to move in the second direction, perform servo control on the driving mechanism according to a rotational speed of the driving mechanism sensed by the second angle sensor.

Optionally,the second angle sensor comprises an incremental angle encoder or a multi-turn absolute angle encoder.

Optionally, the driving mechanism comprises a servo motor and a reducer connected to each other, and an output end of the reducer is connected to the joint; wherein the second angle sensor is arranged on the servo motor and configured to sense a rotational speed of the servo motor.

Compared with the prior art, the flexible mechanical arm control method and the robot system according to the present invention have the following advantages.

The flexible mechanical arm control method, comprises steps of: obtaining a total amount of angular displacement of a joint output end of the flexible mechanical arm along a first direction when a load on the joint output end changes; driving the joint output end to move in a second direction according to the total amount of angular displacement, so that the joint output end returns to a position and posture before the load changes; the second direction is opposite to the first direction. By controlling the joint output end to move in reverse according to the total amount of angular displacement, the change in the position and posture of the joint output end resulting from the change in the load on the joint output end is compensated, so that the joint output end is maintained in the desired position and posture.

### BRIEF DESCRIPTION OF THE DRAWINGS

The accompanying drawings are used to better understand the present invention, and do not constitute improper limitations to the present invention.
Fig. 1 is an overall flow chart of a flexible mechanical arm control method according to an embodiment of the present invention;
Fig. 2 is a schematic structural diagram of a flexible mechanical arm of a robot system according to an embodiment of the present invention;
Fig. 3 is a schematic diagram of the robot system applied to knee arthroplasty;
Fig. 4 is a schematic diagram showing the structure of the robot system in a simple way according to Embodiment 1 of the present invention;
Fig. 5 is a schematic diagram showing the structure of the robot system in a simple way according to Embodiment 2 of the present invention;
Fig. 6 is a flow chart of obtaining the total amount of angular displacement in the flexible mechanical arm control method according to Embodiment 2 of the present invention;
Fig. 7 is a flow chart of obtaining the elastic constant of the torque sensor in the flexible mechanical arm control method according to Embodiment 2 of the present invention;
Fig. 8 is a flow chart of obtaining the total amount of angular displacement in the flexible mechanical arm control method according to Embodiment 3 of the present invention.

### [List of reference signs]:

100: operating trolley;
110: flexible mechanical arm;
111: output interface;
200: navigation trolley;
210: NDI navigation apparatus;
300: femur target;
400: tibia target;
500: base target;
600: osteotomy guide tool;
700: tool target;
800: pendulum saw;
20: driving mechanism;
21: servo motor, 22: reducer;
31: first angle sensor, 32: torque sensor;
40: second angle sensor.

### DETAILED DESCRIPTION

Embodiments of the present invention are described below through specific examples, and those skilled in the art can easily understand other advantages and effects of the present invention from the content disclosed in this specification. The present invention can also be implemented or applied through other different specific embodiments, and various modifications or changes can be made to the details in this specification based on different viewpoints and applications without departing from the spirit of the present invention. It should be noted that the drawings provided in the embodiments are only schematically illustrating the basic idea of the present invention, and only the components related to the present invention are shown in the drawings rather than the number, shape and shape of the components in actual implementation. Dimensional drawing, the type, quantity and proportion of each component can be changed arbitrarily during actual implementation, and constructions of the components may also be more complicated.

In addition, each embodiment of the content described below has one or more technical features, but this does not mean that the one using the present invention must implement all the technical features in any embodiment at the same time, or can only implement some or all of the technical features of different embodiments separately. In other words, on the premise that the implementation is possible, those skilled in the art can selectively implement some or all of the technical features in any embodiment according to the disclosure of the present invention and depending on design specifications or implementation requirements, or selectively implement a combination of some or all of the technical features in multiple embodiments, thereby increasing the flexibility of the implementation of the present invention.

As used in this specification, the singular forms "a", "an" and "the" include plural objects, and the plural form "a plurality" includes two or more objects, unless the content clearly states otherwise. As used in this specification, the term "or" is generally used in the sense including "and/or", unless the content clearly indicates otherwise, and the terms "install", "connect" and "couple" should be understood in a broad sense, for example, it can be a fixed connection, a detachable connection, or an integral connection. It can be a mechanical connection or an electrical connection. It can be directly connected or indirectly connected through an intermediary, and it can be the internal communication of two elements or the interaction relationship between two elements. Those of ordinary skill in the art can understand the specific meanings of the above terms in the present invention according to specific situations.

In order to make the purpose, advantages and features of the present invention clearer, the present invention will be further described in detail below in conjunction with the accompanying drawings. It should be noted that all the drawings are in a very simplified form and use imprecise scales, and are only used to facilitate and clearly assist the purpose of illustrating the embodiments of the present invention. The same or similar reference numerals in the drawings represent the same or similar components.

The present invention aims to provide a flexible mechanical arm control method, which is used to maintain, when the load on the joint output end of the flexible mechanical arm changes, the joint output end in the position and posture before the load changes, so that the position and posture of the tail end of the mechanical arm is maintained. Those skilled in the art should know that the so-called "flexible mechanical arm" refers to a mechanical arm whose joint output end has an angular displacement when the motor driving the mechanical arm is in a holding state and the load on the joint output end of the mechanical arm changes; on the contrary, if the joint output end of a mechanical arm does not have an angular displacement with the change of the load, the mechanical arm is a traditional rigid mechanical arm (in fact, the rigid mechanical arm also has a certain degree of flexibility, but the rigid mechanical arm uses RV reducer or the gearbox to result in minimal flexibility that can be ignored). In addition, the "change in the load on the joint output end" includes two situations, one is that the load directly acting on the joint output end changes, and the other is that the load acting on other parts of the mechanical arm changes, and the change is transmitted to the joint output end, causing the load on the joint output end to change accordingly.

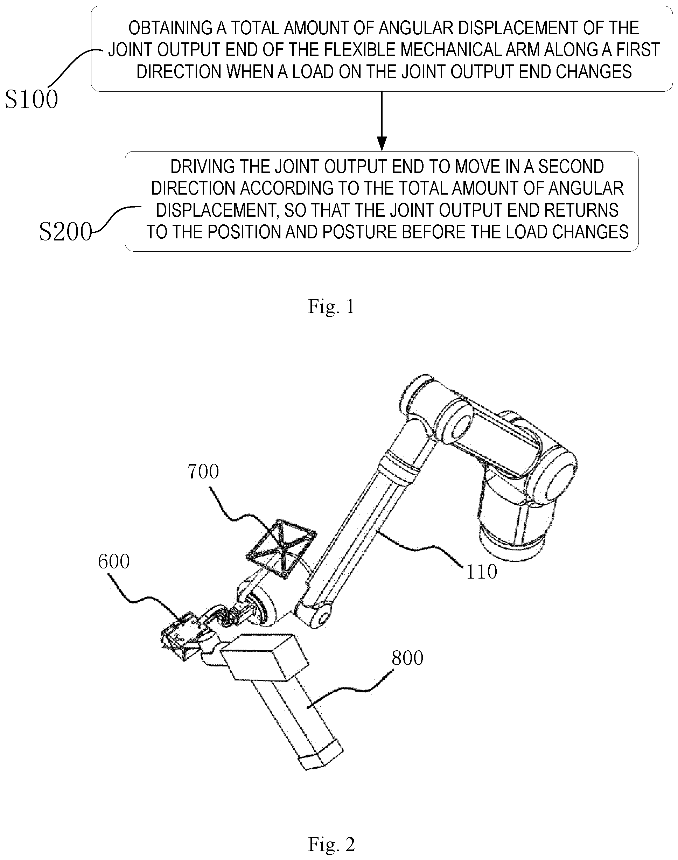

As shown in Fig. 1, the control method includes the following steps:
Step S100: Obtaining a total amount of angular displacement of the joint output end of the flexible mechanical arm along a first direction when a load on the joint output end changes.
Step S200: Driving the joint output end to move in a second direction according to the total amount of angular displacement, so that the joint output end returns to the position and posture before the load changes. The second direction is opposite to the first direction. For example, in some embodiments, the first direction is clockwise and the second direction is counterclockwise, or the first direction is counterclockwise and the second direction is clockwise.

That is, in the flexible mechanical arm control method, when the load on the joint output end of the flexible mechanical arm changes, the total amount of angular displacement of the joint output end of the flexible mechanical arm resulting from the load change is obtained, and then the joint output end is driven to move in reverse, and the angular displacement resulting from the reverse motion is equivalent to the total amount of the angular displacement, so that the deviation in the position and posture of the joint output end resulting from the load change can be offset. In addition, those skilled in the art can understand that the joint output end may have an angular displacement when the load on the joint output end changes, but for the tail end of the entire flexible mechanical arm, there will be a change in position and/or posture.

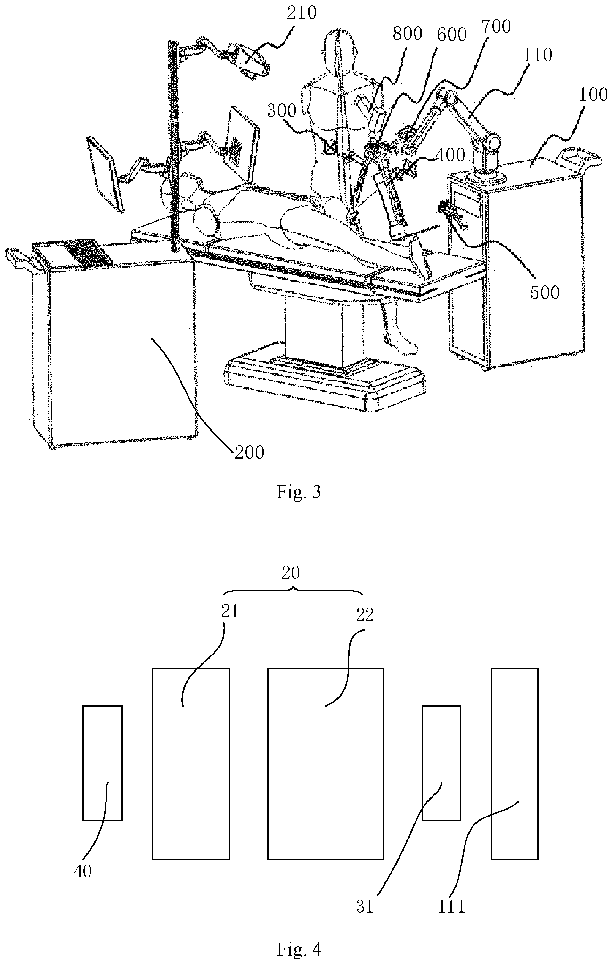

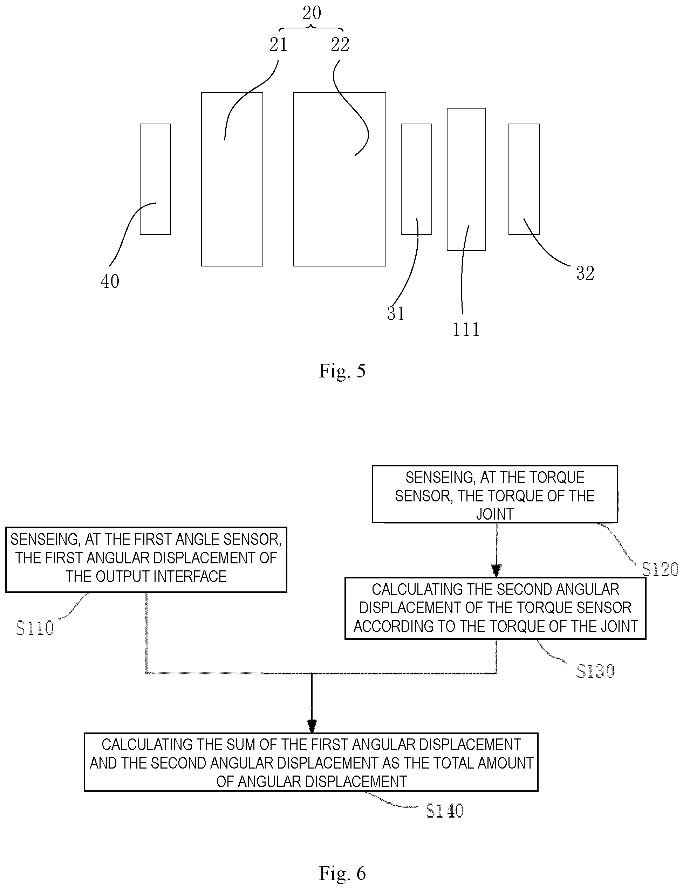

An embodiment of the present invention also provides a robot system. As shown in Figs. 2 and 4, the robot system includes a flexible mechanical arm 110, a sensing device, a driving mechanism 20 and a control unit (not shown in the figures). The flexible mechanical arm 110 includes a plurality of joints, for example six joints, each of which includes a j oint input end and a j oint output end. The sensing device may be arranged on the joint output end. Further, an output interface 111 is provided on the joint output end, and the sensing device is specifically arranged on the output interface 111. The driving mechanism 20 is connected with the joint. The control unit is communicatively connected with the sensing device and the driving mechanism 20. In this way, the sensing device is configured to sense the total amount of angular displacement of the joint output end along the first direction when the load on the joint output end changes. The control unit is configured to control the operation of the driving mechanism 20 according to the total amount of angular displacement, so as to drive the joint output end to move along the second direction until the joint output end returns to the position and posture before the load changes. The sensing device includes at least one of a first angle sensor 31 and a torque sensor 32 (as shown in Fig. 5). According to different configurations of the sensing device, the method for obtaining the total amount of angular displacement is different, which will be described later in detail.

Further, as shown in Fig. 4, the robot system includes a second angle sensor 40 arranged on the driving mechanism 20 and communicatively connected with the control unit. When the joint output end moves along the second direction, the second angle sensor 40 senses the rotational speed of the driving mechanism 20, and the control unit performs servo control on the driving mechanism 20 according to the rotational speed, so as to accurately control the angular displacement of the joint output end moving along the second direction.

Generally, the driving mechanism 20 includes a servo motor 21 and a reducer 22. The output end of the reducer 22 is connected to the joint. The second angle sensor 40 is arranged on the servo motor 21 to sense the rotational speed of the servo motor 21. The second angle sensor 40 includes but not limited to an incremental angle encoder or a multi-turn absolute angle encoder.

When the robot system is applied, using the flexible robotic arm control method to control the flexible robotic arm can maintain the position and posture of the joint output end of the flexible robotic arm, so as to maintain the position and posture of other devices (such as the tail end of the mechanical arm) connected to the joint output end. For example, the control method is suitable for the case where the position and posture of the osteotomy guide tool is to be maintained in knee arthroplasty, the case where the position and posture of the endoscope is to be maintained when the doctor sutures the wound in various operations using a mirror-holding robot to hold the endoscope, or other cases where the joint output end of the flexible mechanical arm is to be maintained in a fixed position and posture. The application of the flexible mechanical arm control method will be described below by taking the knee arthroplasty as an example.

Please refer to Figs. 2 and 3, the surgical apparatus that is applied to knee arthroplasty includes an operating trolley 100, a navigation trolley 200, a femur target 300, a tibia target 400, a base target 500, an aseptic bag (not shown in the figures), an osteotomy guide tool 600 and a tool target 700. The flexible mechanical arm 110 is provided on the operating trolley 100, and a navigation apparatus 210, such as an NDI navigation apparatus, is provided on the navigation trolley 200. Before the operation, the operating trolley 100 and the navigation trolley 200 are placed in a suitable position beside the patient's bed, then the femoral target 300, tibial target 400, base target 500, tool target 700 are installed, and the osteotomy guide tool 600 is installed on the tail end of the flexible mechanical arm 110 through the aseptic bag. Those skilled in the art are familiar with the specific installation and operation methods for the surgical apparatus, which will not be repeated here.

The flexible mechanical arm 110 includes a plurality of joints. The osteotomy guide tool 600 and the tool target 700 are arranged at the tail end of the flexible mechanical arm 110. More specifically, the tool target 700 may be arranged on the osteotomy guide tool 600. Each of the joints includes a joint input end, a joint output end and an output interface, which are sequentially connected. The output interface of the joint at the tail end of the flexible mechanical arm 110 is an instrument interface. The instrument interface is connected with the osteotomy guide tool 600. The joint input end is connected with the driving mechanism, so as to transmit the driving force generated from the driving mechanism to the joint output end, the instrument interface and the osteotomy guide tool 600.

A preoperative planning is required before the operation begins. Specifically, the doctor imports the CT scan model of the patient's bones into the computer system for preoperative planning, which for example includes planning the coordinates of the osteotomy plane, selecting a suitable type of prosthesis, and planning the position and orientation for installing the prosthesis. It should be known that the computer system includes a main display screen, a keyboard and a controller located in the navigation trolley 200.

The doctor then uses the target pen to point the feature points of the patient's femur and tibia, and the NDI navigation apparatus 210 installed in the navigation trolley 200 takes the base target 500 as a reference to record the positions of the feature points, and send the position information of the feature points to the computer system. Then the computer system obtains the actual positions and orientations of the femur and the tibia through feature matching calculations, which correspond to the positions and orientations of the femur and the tibia in the CT scan model. Subsequently, the NDI navigation apparatus 210 establishes a mapping relationship between the actual position and orientation of the femur and the femoral target 300 installed on the femur, and establishes a mapping relationship between the actual position and orientation of the tibia and the tibial target 400 installed on the tibia. In this way, The actual position of the bones can be tracked according to the femoral target 300 and the tibial target 400. Those skilled in the art should know that during the operation, as long as the mapping relationship between the femoral target 300 and the femur is fixed, and the mapping relationship between the tibial target 400 and the tibia is fixed, the surgical effect will not be affected even if the bones move.

The NDI navigation apparatus 210 sends the preoperatively planned osteotomy plane coordinates to the flexible mechanical arm 110, and the flexible mechanical arm 110 locates the osteotomy plane through the tool target 700 and moves to a predetermined position. Afterwards, the joint output end of the flexible mechanical arm 110 needs to be maintained in a fixed/desired position and posture, so as to maintain the osteotomy guide tool 600 in a fixed pose/desired position and posture. As a result, the doctor can use the pendulum saw 800 to perform an osteotomy operation through the guide slot on the osteotomy guide tool 600, and use an electric drill to perform a drill operation through the guide hole on the osteotomy guide tool 600.

After the osteotomy and drilling operations, doctors can install prostheses and perform other procedures.

In knee arthroplasty, the doctor will apply a certain force to the osteotomy guide tool when performing osteotomy or drilling operation, and the magnitude of the force may be changed as needed. The load on the joint output end includes the osteotomy guide tool 600 and the first force applied by the doctor to the osteotomy guide tool. In addition, the second force applied by the doctor to other parts of the flexible mechanical arm 110 also constitutes a part of the load on the joint output end after being transmitted to the joint output end. When the first force or the second force changes, the joints of the flexible mechanical arm 110 are stressed and will have a certain angular displacement, which will affect the position and posture of the joint output end, thereby affecting the position and posture of the tail end of the flexible mechanical arm 110 or of the osteotomy guide tool 600. At this time, the flexible mechanical arm control method is used to control the flexible mechanical arm to offset changes in the position and posture of the tail end of the flexible mechanical arm or of the osteotomy guide tool resulting from the angular displacement caused from the changes in the load on the joint output end, so that the joint output end can be maintained in the fixed position and posture, thereby ensuring that the tail end of the flexible mechanical arm or the osteotomy guide tool is maintained in the fixed/desired position and posture.

Here, specific embodiments are used to illustrate the specific implementation of obtaining the total amount of angular displacement of the joint output end in the flexible robotic arm control method when the sensing device of the robot system has different configurations.

### Embodiment 1

Please refer to Fig. 4, the sensing device includes a first angle sensor 31 connected to the output interface 111 of the joint. The first angle sensor 31 includes but not limited to an absolute angle encoder.

When the load on the joint output end changes, the rigid components on the flexible mechanical arm, such as the rotating shaft of the driving mechanism 20, will have angular displacements along the first direction, and the angular displacements will be transmitted to the output interface 111 and sensed by the first angle sensor 31. That is to say, the first angular displacement of the output interface 111 sensed by the first angle sensor 31 is the total amount of angular displacement of the joint output end, and the first angular displacement is directly sensed by the first angle sensor 31.

### Embodiment 2

Please refer to Fig. 5, in this embodiment, the sensing device includes a first angle sensor 31 and a torque sensor 32. The input end of the first angle sensor 31 is connected to the output interface 111, and the output end of the first angle sensor 31 is connected to the input end of the torque sensor 32. The torque sensor 32 is mainly used to sense the torque of the joints of the flexible mechanical arm, so that the flexible mechanical arm can be controlled by the torque of the joints, thereby preventing the flexible mechanical arm from colliding with other structures during its movement. However, in this embodiment, when the torque sensor 32 senses the torque of the joints of the flexible mechanical arm, the torque sensor itself deforms to have a second angular displacement, and transmits the second angular displacement to the joint output end. The second angular displacement of the torque sensor 32 can be sensed by the torque sensor 32 itself.

Similar to Embodiment 1, when the load on the joint output end changes, the rigid components on the flexible mechanical arm, such as the rotating shaft of the driving mechanism 20, will have angular displacements along the first direction, and the angular displacements will be transmitted to the output interface 111 and sensed by the first angle sensor 31.

Therefore, as shown in Fig. 6, obtaining the total amount of angular displacement in the flexible mechanical arm control method described in this embodiment includes:
Step S 110: sensing, at the first angle sensor, the first angular displacement of the output interface, the value of which is obtained from the reading variation of the first angle sensor.
Step S120: sensing, at the torque sensor, the torque of the joint, which is obtained from the reading variation of the torque sensor.
Step S130: Calculating the second angular displacement of the torque sensor according to the torque and the elastic constant of the torque sensor.
Step S140: Calculating the sum of the first angular displacement and the second angular displacement as the total amount of angular displacement.
Step S110 and Step S120 can be executed synchronously.

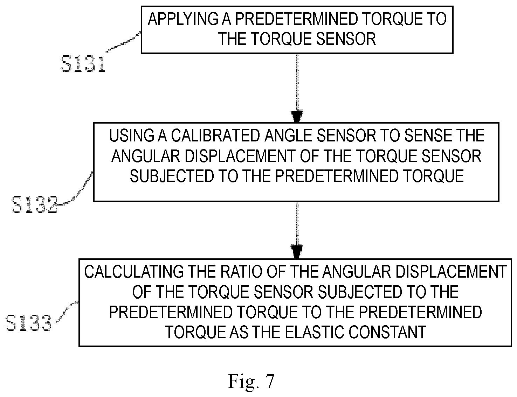

In Step S130, the elastic constant is obtained as shown in Fig. 7:
Step S131: Applying a predetermined torque to the torque sensor;
Step S132: Using a calibrated angle sensor to sense the angular displacement of the torque sensor subjected to the predetermined torque;
Step S133: Calculating the ratio of the angular displacement of the torque sensor subjected to the predetermined torque to the predetermined torque as the elastic constant.

In this way, when the load on the joint output end changes, the second angular displacement of the torque sensor 32 is the product of the torque of the joint measured by the torque sensor 32 and the elastic constant.

Those skilled in the art can understand that the calibrated angle sensor is installed on the torque sensor 32 and is only used to obtain the elastic constant. After the elastic constant is calculated, the calibrated angle sensor can be removed. In addition, the elastic constant can be measured outside the robot system (that is, the torque sensor can be detached from the flexible mechanical arm to measure the elastic constant), and the elastic constant can also be directly measured on the flexible mechanical arm.

### Embodiment 3

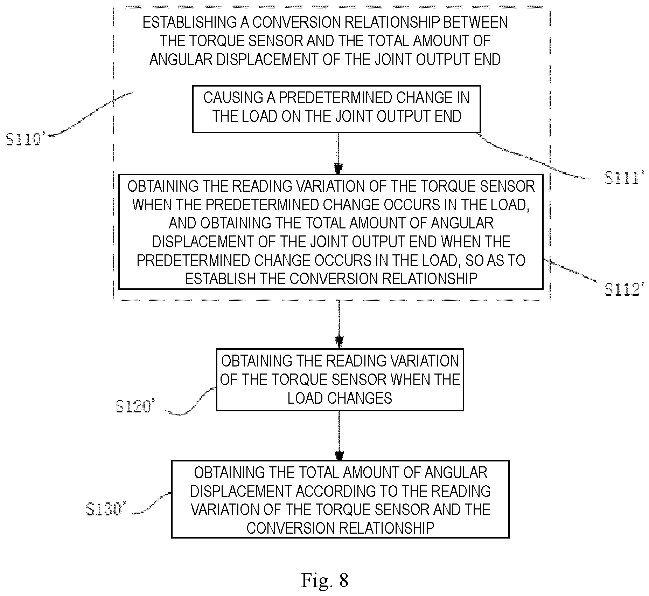

In this embodiment, as shown in Fig. 5, the flexible mechanical arm is provided with a first angle sensor 31 and a torque sensor 32. The input end of the torque sensor 32 is connected to the output interface 111 of the joint, and the output end of the torque sensor 32 is connected to the input end of the first angle sensor 31. In this embodiment, only the torque sensor 32 is used to obtain the total amount of angular displacement. The specific method is shown in Fig. 8, including the following steps:
Step S110': Establishing a conversion relationship between the torque sensor and the total amount of angular displacement of the joint output end before the load changes.
Step S120': Obtaining the reading variation of the torque sensor when the load changes.
Step S130': Obtaining the total amount of angular displacement according to the reading variation of the torque sensor and the conversion relationship.
Step S110' includes the following steps:
   Step S111': Causing a predetermined change in the load on the joint output end.
   Step S112': Obtaining the reading variation of the torque sensor when the predetermined change occurs in the load, and obtaining the total amount of angular displacement of the joint output end when the predetermined change occurs in the load, so as to establish the conversion relationship.

In Step S112', the first position and posture of the joint output end is obtained using the robot kinematics before the predetermined change occurs, then the second position and posture of the joint output end is obtained using the robot kinematics when the predetermined change occurs, and the total amount of angular displacement of the joint output end in response to the predetermined change occurring in the load can be obtained according to the difference between the first position and posture and the second position and posture.

### Embodiment 4

In this embodiment, the flexible mechanical arm is only provided with a torque sensor 32 and no first angle sensor 31 is provided, and the method of obtaining the total amount of angular displacement of the joint output end in this embodiment is the same as that of Embodiment 3, that is, before the load changes, the conversion relationship between the reading variation of the torque sensor 32 and the total amount of angular displacement of the joint output end is first established, and then, when the load changes, the total amount of angular displacement is obtained according to the reading variation of the torque sensor 32 and the conversion relationship.

### Embodiment 5

In this example, the flexible mechanical arm is provided with a first angle sensor 31 and a torque sensor 32. The input end of the torque sensor 32 is connected to the output interface 111 of the joint, and the output end of the torque sensor 32 is connected to the input end of the first angle sensor 31. In this way, the angular displacement measured by the first angle sensor 31 includes the first angular displacement of the output interface and the second angular displacement of the torque sensor. That is to say, the total amount of angular displacement can be obtained directly by the reading variation of the first angle sensor.

Although the present invention is disclosed above, it is not limited thereto. Those skilled in the art can make various changes and modifications to the present invention without departing from the spirit and scope of the present invention. Thus, if these modifications and variations of the present invention fall within the scope of the claims of the present invention and their equivalences, the present invention also intends to include these modifications and variations.

## Claims

1. A flexible mechanical arm control method, comprising steps of:
obtaining a total amount of angular displacement of a joint output end of the flexible mechanical arm along a first direction when a load on the joint output end changes;
driving the joint output end to move in a second direction according to the total amount of angular displacement, so that the joint output end returns to a position and posture before the load changes; wherein the second direction is opposite to the first direction.

2. The flexible mechanical arm control method according to claim 1, wherein an output interface is provided on the joint output end, and a first angle sensor is provided on the output interface;
the first angle sensor is configured to sense a first angular displacement of the output interface as the total angular displacement of the joint output end.

3. The flexible mechanical arm control method according to claim 1, wherein an output interface is provided on the joint output end, a first angle sensor is provided on the output interface, and a torque sensor is provided on an output end of the first angle sensor;
wherein obtaining the total amount of angular displacement comprises:
sensing a first angular displacement of the output interface by the first angle sensor;
sensing a torque of a joint by the torque sensor;
calculating a product of the torque of the joint and an elastic constant of the torque sensor as a second angular displacement of the torque sensor;
calculating a sum of the first angular displacement and the second angular displacement as the total amount of angular displacement.

4. The flexible mechanical arm control method according to claim 3, wherein the elastic constant of the torque sensor is obtained by:
applying a predetermined torque to the torque sensor;
using a calibrated angle sensor to sense an angular displacement of the torque sensor subjected to the predetermined torque;
calculating the elastic constant based on the predetermined torque and the angular displacement of the torque sensor subjected to the predetermined torque.

5. The flexible mechanical arm control method according to claim 1, wherein an output interface is provided on the joint output end, a torque sensor is provided on the output interface, and a first angle sensor is provided on an output end of the torque sensor;
wherein obtaining the total amount of angular displacement comprises:
establishing a conversion relationship between a reading variation of the torque sensor and the total amount of angular displacement before the load changes;
obtaining the reading variation of the torque sensor when the load changes;
obtaining the total amount of angular displacement according to the reading variation of the torque sensor and the conversion relationship.

6. The flexible mechanical arm control method according to claim 5, wherein establishing the conversion relationship between the reading variation of the torque sensor and the total amount of angular displacement comprises:
causing a predetermined change in the load on the j oint output end;
obtaining the reading variation of the torque sensor when the predetermined change occurs in the load, and obtaining the total amount of angular displacement of the joint output end when the predetermined change occurs in the load using a forward kinematics of robot, so as to establish the conversion relationship.

7. The flexible mechanical arm control method according to claim 1, wherein an output interface is provided on the joint output end, a torque sensor is provided on the output interface, and a first angle sensor is provided on an output end of the torque sensor; wherein the control method comprises:
sensing the total amount of angular displacement by the first angle sensor.

8. The flexible mechanical arm control method according to claim 1, wherein an output interface is provided on the joint output end, and a torque sensor is provided on the output interface;
wherein obtaining the total amount of angular displacement comprises:
establishing a conversion relationship between the torque sensor and the total amount of angular displacement before the load changes;
obtaining a reading variation of the torque sensor when the load changes;
obtaining the total amount of angular displacement according to the reading variation of the torque sensor and the conversion relationship.

9. The flexible mechanical arm control method according to claim 8, wherein establishing the conversion relationship between the torque sensor and the total amount of angular displacement comprises:
causing a predetermined change in the load on the j oint output end;
obtaining the reading variation of the torque sensor when the predetermined change occurs in the load, and obtaining the total amount of angular displacement of the joint output end when the predetermined change occurs in the load using robot kinematics, so as to establish the conversion relationship.

10. The flexible mechanical arm control method according to any one of claims 1-9, wherein the joint output end is driven to move in the second direction by a driving mechanism, and during the movement of the joint output end in the second direction, a second angle sensor is used to sense a rotational speed of the driving mechanism, and the driving mechanism is servo-controlled according to the rotational speed.

11. A robot system, comprising:
a flexible mechanical arm comprising a joint, the joint comprising a joint output end;
a sensing device, arranged on the joint output end;
a driving mechanism, connected to the joint; and
a control unit, communicatively connected with the sensing device and the driving mechanism;
wherein the control unit is configured to obtain a total amount of angular displacement of the joint output end along a first direction when a load on the joint output end sensed by the sensing device changes; and control the driving mechanism according to the total angular displacement to move the joint output end in a second direction until the joint output end returns to a position and posture before the load changes; wherein the second direction is opposite to the first direction.

12. The robot system according to claim 11, wherein the sensing device comprises a first angle sensor or a torque sensor.

13. The robot system according to claim 11, wherein an output interface is provided on the joint output end, and the sensing device comprises a first angle sensor and a torque sensor; wherein an input end of the first angle sensor is connected to the output interface, and an output end of the first angle sensor is connected to an input end of the torque sensor; or
wherein an input end of the torque sensor is connected to the output interface, and an output end of the torque sensor is connected to an output end of the first angle sensor.

14. The robot system according to claim 12 or 13, wherein the first angle sensor comprises an absolute angle encoder.

15. The robot system according to any one of claims 11-13, comprising a second angle sensor arranged on the driving mechanism and communicatively connected with the control unit;
wherein the control unit is further configured to, when the driving mechanism drives the joint output end to move in the second direction, perform servo control on the driving mechanism according to a rotational speed of the driving mechanism sensed by the second angle sensor.

16. The robot system according to claim 15, wherein the second angle sensor comprises an incremental angle encoder or a multi-turn absolute angle encoder.

17. The robot system according to claim 15, wherein the driving mechanism comprises a servo motor and a reducer connected to each other, and an output end of the reducer is connected to the joint; wherein the second angle sensor is arranged on the servo motor and configured to sense a rotational speed of the servo motor.
